**Europäisches Patentamt**

**European Patent Office**

**Office européen des brevets**

(19)

(11) Veröffentlichungsnummer: **0 284 934 B1**

(12) # EUROPÄISCHE PATENTSCHRIFT

(45) Veröffentlichungstag der Patentschrift:
27.02.91 Patentblatt 91/09

(51) Int. Cl.⁵: **C03C 8/02, C23D 5/04**

(21) Anmeldenummer: **88104451.5**

(22) Anmeldetag: **21.03.88**

(54) **Emailfritten für Stahlblech mit verbesserter Haftung.**

Die Akte enthält technische Angaben, die nach dem Eingang der Anmeldung eingereicht wurden und die nicht in dieser Patentschrift enthalten sind.

(56) Entgegenhaltungen:
EP-A- 0 018 559
EP-A- 0 086 109
EP-A- 0 196 594

(30) Priorität: **31.03.87 DE 3710608**

(43) Veröffentlichungstag der Anmeldung:
**05.10.88 Patentblatt 88/40**

(45) Bekanntmachung des Hinweises auf die Patenterteilung:
**27.02.91 Patentblatt 91/09**

(84) Benannte Vertragsstaaten:
**BE DE ES FR GB IT NL**

(73) Patentinhaber: **BAYER AG**
**D-5090 Leverkusen 1 Bayerwerk (DE)**

(72) Erfinder: **Schittenhelm, Hans-Joachim, Dr.**
**Walter-Flex-Strasse 6**
**D-5090 Leverkusen 1 (DE)**
Erfinder: **Joseph, Werner, Dr.**
**Ludwig-Aschoff-Strasse 20**
**D-5000 Köln (DE)**

EP 0 284 934 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Emailfritten für Stahlblech mit überlegener Haftung bei niederen Einbrenntemperaturen, insbesondere für den Einsatz auf ungebeizten, nicht vernickelten Stahlsubstraten.

Grundemail- und Direktemailfritten haben die Aufgabe, eine gute Haftung zwischen dem metallischen Werkstück und der glasartigen Emailschicht herzustellen. Weiter soll die Emaillierung über einen breiten Temperaturbereich brennbeständig sein, eine glatte, fehlerfreie Oberfläche aufweisen und auch nach wiederholtem Einbrand keine Haftungsminderung erleiden. Die Entwicklung dieser Emailfritten erfolgte bisher empirisch. Es wurden sogenannte netzwerkbildende Oxide wie $SiO_2$, $TiO_2$, $ZrO_2$, $B_2O_3$, $Al_2O_3$ mit Netzwerkwandlern wie $Li_2O$, $Na_2O$, $K_2O$ oder MgO, CaO, BaO ferner Fluoride und Phosphate solange kombiniert und variiert bis die gewünschten emailtechnischen Eigenschaften wie Fließverhalten, Oberflächenspannung, thermische Ausdehnung, Oberflächengüte und Haftung erzielt wurden. Bei Grundemails wurden zur Haftungsverbesserung Schwermetalloxide wie CoO, NiO und CuO, gelegentlich auch Eisenoxid, Manganoxid, Molybdänoxid oder Antimonoxid in unterschiedlichen Mengen zugegeben.

Bei Direktemailfritten förderte die Zugabe von $TiO_2$ die Resistenz der Emaillierung gegen sauren Angriff, der Zusatz von $ZrO_2$ die Beständigkeit gegen alkalische Beanspruchung.

Schmelzversätze von Grund- und Direktemailfritten mit mehr als 12 oxidischen Bestandteilen sind daher keine Seltenheit. Ihre Entwicklung ist wie bei allen Vielkomponentensystemen unübersichtlich, aufwendig und damit kostspielig. Die Wirkung einer Komponente auf gewisse Fritteneigenschaften verläuft selten proportional ihrem Gewichtsanteil und unabhängig von den anderen Partnern. Eine bei einfachen Gläsern empfohlene Inkrementrechnung ist nur in Ausnahmefällen, z.B. bei der thermischen Ausdehnung, annäherungsweise möglich. Erschwerend kommt hinzu, daß meist mehrere Emailfritten untereinander gemischt oder aus emailtechnischen oder wirtschaftlichen Gründen Inertstoffe zugefügt werden.

So werden bei konventionellen Zwei- oder Mehrschichtemaillierungen für die Grundemaillierung Fritten mit unterschiedlichem Viskositäts- und Aufschmelzverhalten kombiniert und Inertstoffe zur Erleichterung der vom Stahlblech ausgehenden Gasreaktionen zugesetzt.

Man bezeichnet die bei Einbrenntemperatur viskosen, harten Grundemails als Füllgrund, die niedrigviskosen, weichen Fritten mit guter Benetzung und Eisenoxidlösevermögen als Netzgrundemails. Ihr Mischverhältnis sowie die Quarzzugabe hängt von Stahlqualität und Blechstärke sowie von Einbrenntemperatur und Verweilzeit ab. Auch hier werden der Anteil der Fritten und die Mühlenzusätze empirisch gewählt und unter Praxisbedingungen bestätigt oder variiert. Vorhersagen über optimale Eigenschaften wie Verträglichkeit der Fritten untereinander, Haftung auf unterschiedlich vergossenen Stahlqualitäten und rheologische Schlickereigenschaften waren selten möglich.

In EP-A1-18559 wird ein Verfahren zum Emaillieren von kaltgewalztem Stahl ohne Vorbehandlung und ein derart emailliertes Stahlblech beschrieben. Die zu applizierende Fritte, die bei Temperaturen zwischen etwa 675°C und 1100°C schmelzbar ist, besteht im wesentlichen aus Glasnetzwerkbildnern und Flußmitteln sowie Haftoxiden. Bevorzugt wird auf diese Grundemailschicht noch eine Deckemailschicht aufgebracht.

Aus der EP-A2-86109 sind niedrig schmelzende Emailfritten bekannt, die bei unter 723°C gebrannt werden und aus $SiO_2$, $B_2O_3$, $Na_2O$, $K_2O$, ZnO, F2 und wenigstens einem Oxid aus der Gruppe $Al_2O_3$, $TiO_2$, $ZrO_2$ bestehen. Haftoxide sind, wenn überhaupt, nur bedingt in der Fritte vorhanden.

Überraschenderweise wurde gefunden, daß brennbeständige Emailfritten mit ausgezeichneter Haftung insbesondere bei niedrigen Temperaturen und fehlerfreier Oberfläche über einen breiten Brennbereich immer dann erhalten werden, wenn die Atomzahlen der Frittenbestandteile folgende allgemeine Bedingung erfüllen :

$\Sigma$ einwertige Atom + 2 $\Sigma$ zweiwertige Atome –
$\Sigma$ fünfwertige Atome – $\Sigma$ fluoratome =
= $\Sigma$ dreiwertige Atome
= $\Sigma$ vierwertige Atome.

Die Abweichung vom Verhältnis 1 : 1 : 1 soll maximal $\pm$ 8%, vorzugsweise $\pm$ 6% und besonders bevorzugt $\pm$ 4% für jeden der Anteile betragen.

Die erfindungsgemäßen Fritten enthalten die folgenden Bestandteile in den jeweils genannten Bereichen, wobei natürlich die o.g. Bedingung erfüllt sein muß :

| $Na_2O$ | 5 - 25 Gew.-% |
|---|---|
| $K_2O$ | 0 - 12 |
| $Li_2O$ | 0 - 8 |
| $BaO$ | 0 - 26 |
| $CaO$ | 0 - 16 |
| $MgO$ | 0 - 2 |
| $F$ | 0 - 10 |
| $B_2O_3$ | 5 - 30 |
| $Al_2O_3$ | 0 - 10 |
| $SiO_2$ | 25 - 65 |
| $ZrO_2$ | 0 - 16 |
| $TiO_2$ | 0 - 14. |

Wendet man die allgemeine Formel auf die bei Grund- und Direktemailfritten verwendeten Komponenten an, so ergibt sich sinngemäß folgende Formel :

$\Sigma$ Alkaliatome + 2 $\Sigma$ Erdalkaliatome – $\Sigma$ Fluoratome –
– $\Sigma$ Phosphoratome =
= $\Sigma$ Boratome + $\Sigma$ Aluminiumatome =
= $\Sigma$ Siliziumatome + $\Sigma$ Zirkonatome + $\Sigma$ Titanatome.

Als Haftoxide werden in üblicher Weise Nickeloxid allein oder zusammen mit Kobaltoxid und/oder Kupfer-, Mangan-, Eisenoxid in Mengen von jeweils 1 bis 6, vorzugsweise 2 bis 4, Gew.-%, bezogen auf die Gesamtfritte, eingeschmolzen.

Aus ökonomischen und ökologischen Gründen werden heute die Grund- und Direktemaillierungen auf ungebeiztem, nicht vernickeltem Stahl bevorzugt. Mit dieser neuen Technologie wird eine merkliche Energieeinsparung durch Fortfall der beheizten Beiz- und Spülbäder erzielt. Darüber hinaus entfällt die Aufbereitung und Entsorgung der verbrauchten Beizflüssigkeiten, des Nickelbades sowie der belasteten Spülflüssigkeiten.

Überraschenderweise wurde gefunden, daß sich die erfindungsgemäßen Emails für die Applikation auf ungebeizten, nicht vernickelten Stahlsubstraten besonders gut eignen und handelsüblichen Grund- und Direktemails überlegen sind.

Für den Schlickerauftrag durch Fluten, Tauchen oder Spritzen müssen die zu emaillierenden Werkstücke entfettet werden, beim Aufbringen der beschriebenen Emailfritten als Pulver mit Hilfe des elektrischen Feldes wird auch die Entfettung entbehrlich.

Die erfindungsgemäßen Emailfritten werden aus handelsüblichen Emailrohstoffen wie Borax ($Na_2B_4O_7$ · 5 $H_2O$), Quarzmehl, Natriumtripolyphosphat, Feldspat, Zirkonsand, Flußspat, Alkali- und Erdalkalikarbonaten sowie den entsprechenden Schwermetalloxiden bei 1.100°C "Fadenglatt" geschmolzen und über wassergekühlten Stahlwalzen abgeschreckt. Die so entstandenen Flakes wurden sowohl als Emailpulver im elektrostatischen Feld als auch als wäßrige Suspension in Schlickerform durch Tauchen oder Spritzen auf 1 mm Prüfbleche aufgebracht und in einem Temperaturgradientenofen im Temperaturbereich zwischen 770 und 880°C eingebrannt.

Die Schichtstärke des eingebrannten Emails betrug 0,15 mm. Die Haftungsprüfung erfolgte mit dem Fallgerät unter Verformung des Stahlbleches und visuelle Beurteilung des Haftungsbildes entsprechend dem DEZ-Merkblatt F 6.2.

Bei dem in Beispiel 1 angegebenen Vielkomponentensystem ist die erfindungsgemäße Beziehung der Atomzahlen $\Sigma$ Alkaliatome (Na, K, Li) + 2 $\Sigma$ Erdalkaliatome (Mg, Ca, Ba) –$\Sigma$ Fluoratome – $\Sigma$ Phosphoratome = $\Sigma$ Boratome + $\Sigma$ Aluminiumatome = $\Sigma$ Siliziumatome + $\Sigma$ Zirkonatome + $\Sigma$ Titanatome mit einer Abweichung von ± <1% erfüllt.

Diese Fritte zeichnet sich unabhängig vom Auftragsverfahren nach dem Einbrennen durch glatte, fehlerfreie Oberfläche aus und zeigt ausgezeichnete Haftung über den gesamten Temperaturbereich von 770 bis 880°C.

Modifiziert und vereinfacht man die in Beispiel 1 angegebene oxidische Zusammensetzung derart, daß man das 4-wertige Zr und Ti im $ZrO_2$ bzw. $TiO_2$ zugunsten von $SiO_2$, das 3-wertige Al im $Al_2O_3$ zugunsten von $B_2O_3$, das 2-wertige Mg und Ba im MgO bzw. BaO zugunsten von CaO in der Weise ersetzt, daß die Summe der Atomzahlen der erfindungsgemäßen Formel $\Sigma$ Alkaliatome (Na, K, Li) + 2 $\Sigma$ Erdalkaliatome (Ca) − $\Sigma$ Phosphoratome − $\Sigma$ Fluoratome = $\Sigma$ Boratome = $\Sigma$ Siliziumatome wieder erfüllt ist, so erhält man wiederum ein Grundemail, das im gewählten Temperaturintervall zwischen 770 und 880°C sehr gute Haftung und Oberfläche ergibt.

Zum Beweis, daß die erfindungsgemäße Atomzahlformel allgemeine Gültigkeit hat, wurden die beschriebenen Vielkomponentengrundemails auf ein überschaubares Phosphor-, Erdalkali- und fluorfreies Dreistoffsystem $Na_2O/B_2O_3/SiO_2$ vereinfacht und als Haftoxid nur NiO eingeführt.

Die auf $\Sigma$ Natriumatome = $\Sigma$ Boratome = $\Sigma$ Siliziumatome reduzierte Atomzahlformel wurde wie in Beispiel 2 näher beschrieben, bei gleichem Atomzahlverhältnis Si : B = 1 : 1 über den Na-Gehalt in einem breiten Bereich wie folgt modifiziert :

| Fritte Nr. | Formel | Gew.-% | | | |
|---|---|---|---|---|---|
| | | $SiO_2$ | $B_2O_3$ | $Na_2O$ | NiO |
| 1 | $Si_1B_1Na_{0,6}Ni_{0,06}O_z$ | 50,9 | 29,5 | 15,8 | 3,8 |
| 2 | 0,7 | 49,6 | 28,8 | 17,9 | 3,7 |
| 3 | 0,8 | 48,4 | 28,0 | 20,0 | 3,6 |
| 4 | 0,9 | 47,2 | 27,4 | 21,9 | 3,5 |
| 5 | 1,0 | 46,1 | 26,7 | 23,8 | 3,4 |
| 6 | 1,1 | 45,0 | 26,1 | 25,5 | 3,4 |
| 7 | 1,2 | 44,0 | 25,5 | 27,2 | 3,3 |
| 8 | 1,3 | 43,0 | 24,9 | 28,9 | 3,2 |
| 9 | 1,4 | 42,1 | 24,4 | 30,4 | 3,1 |

Die Fritten Nr. 1 bis 9 wurden, wie in der Deutschen Patentschrift 2 025 072 beschrieben, als Pulver ohne Mühlenzusätze unter gleichen Versuchsbedingungen auf Probebleche aufgebracht und bei 770, 785 und 805°C jeweils gleiche Zeiten eingebrannt.

Zur Haftungsprüfung wurde das Fallgerät nach DEZ Merkblatt F 6.2 herangezogen. Die Beurteilung erfolgt visuell an der verformten Probe, wobei Haftstufe Nr. 1 als 100%, Haftstufe Nr. 5 als 0% angegeben wird.

Die Ergebnisse dieser Versuchsreihe sind als Brennkurven A = 770°C, B = 785°C und C = 805°C im beiliegenden Diagramm dargestellt.

Hieraus geht eindeutig hervor, daß die beste Haftung insbesondere im Bereich niedriger Temperaturen von Grundemailfritten mit dem Atomverhältnis Si : B : Na : (NiO) = 1 : 1 : 1 : (0,06) erzielt werden.

Eine Erhöhung oder Verminderung des Na-Gehaltes im System $Si_1B_1Na_{0,6-1,4}Ni_{0,06}$ führt bei Abweichung von Na = 1 auch bei höherer Einbrenntemperatur zu einer Verschlechterung der Haftung, obwohl die Fließwerte der Fritten nach DIN 51 161 mit steigendem Na-Gehalt zunehmen.

Dies ist überraschend und widerspricht dem bekannten Stand der Technik, bei dem man davon ausgeht, daß $B_2O_3$-reiche Fritten die Benetzung fördern und weiche Grundemails bei gleichem Haftoxidgehalt besser haften als harte Grundemails (Füllgrundemails, Netzgrundemails).

Wie aus der Brennreihe weiter ersichtlich ist, ergeben Grundemails auf Stahlsubstraten um so schlechtere Haftung je weiter die Fritten von dem erfindungsgemäßen Atomverhältnis Si : B : Na = 1 : 1 : 1 abweichen. Erwartungsgemäß zeigen Emails der Zusammensetzung $Si_1B_1Na_{1,4}Ni_{0,06}$ und $Si_1B_1Na_{0,6}Ni_{0,06}$ nach elektrostatischem Auftrag auf 1 mm Blech und Einbrenntemperatur bei 785°C praktisch keine Haftung. Mischt man jedoch beide Fritten zu gleichen Teilen zusammen, so daß sich in der Mischung wiederum das ideale Atomverhältnis $Si_1B_1Na_1Ni_{0,06}$ ergibt, so ist überraschenderweise an emaillierten, bei 785°C eingebrannten Blechen eine ausgezeichnete Haftung festzustellen.

4

Dies bedeutet, daß Haftung bei niedrigen Einbrenntemperaturen auch mit Frittenkombinationen erzielt werden kann, wenn die Einzelkomponenten von dem erfindungsgemäßen Atomverhältnis abweichen, im Gemisch jedoch die Forderung Na : B : Si = 1 : 1 : 1 erfüllt wird.

Für die Applikation als Schlicker ist das einfache $Si_1B_1Na_1Ni_{0,06}$ System nur in Ausnahmefällen geeignet. Die relativ hohe Löslichkeit beim Vermahlen der Fritte oder Lagern verändert die Schlickerrheologie und damit das Auftragsverhalten. Zur Verminderung der Auslaugung wurden daher die Glasstruktur-stabilisierenden Elemente eingeführt.

Es hat sich als günstig erwiesen, Natrium in gewissen Grenzen teilweise durch andere Alkalien wie Kalium und/oder Lithium, ein Teil des Bors durch Aluminium sowie Silizium partiell durch Zirkon zu ersetzen. Derartige Emails zeichnen sich wiederum durch gute Haftung bei niederer Temperatur aus, solange das Atomverhältnis $Me^{+4} : Me^{+3} : Me^{+1} = 1 : 1 : 1$ unverändert bleibt. Als Limit für diese Kompensation gelten dann die Atomzahlen $Na_{1-x}(Li+K)_xB_{1-x}Al_xSi_{1-x}Zr_x Ni_{0,06}$.

Weiter wurde gefunden, daß anstelle von Alkalien auch Erdalkalien wie Kalzium und/oder Barium ohne nennenswerte Haftungsveränderung eingeführt werden können, sofern die Atomzahlen für das Erdalkaliäquivalent ($Me/_2$) 20% des Na nicht überschreiten. Es gilt dann die Formel $Alkali_{1-x} Erdalkali_{x/2}Me^{+3}_{1,0}Me+4 1,0Ni_{0,06}$ (x bis 0,2). Weitere Elemente wie Fluor als Fluorid oder Phosphor als Phosphat eingesetzt können gelegentlich Schlickerrheologie, Schmelzverhalten und Oberflächenglätte günstig beeinflussen. Es gilt dann wiederum die erfindungsgemäße durch die Wertigkeiten der Elemente bestimmte Kombinationsregel : Σ Alkaliatome + 2 Σ Erdalkaliatome – Σ Fluoratome – Σ Phosphoratome = Σ Boratome + Σ Aluminiumatome = Σ Siliziumatome + Σ Zirkonatome.

Die besten Ergebnisse wurden mit 4 Gew.-% NiO erzielt. Eine Erhöhung des Ni-Gehaltes führte zu keiner weiteren Verbesserung der Haftung. Neben Nickeloxid können auch Kobaltoxid und Kupferoxid als Haftoxide sowie zur Farbgebung Manganoxid und Eisenoxid eingeschmolzen werden. Dabei sollte schon aus wirtschaftlichen Gründen das Verhältnis Ni : Co (Cu) von 3 : 1 nicht unterschritten werden.

Der Gegenstand der vorliegenden Erfindung soll anhand der folgenden Beispiele noch näher erläutert werden.

Beispiel 1

Aus handelsüblichen Emailrohstoffen wurde in einem Schamottetiegel von 500 ml Volumen bei 1.100°C eine Emailfritte folgender Zusammensetzung erschmolzen :

| Gewichts-% | | Atomzahl pro 10.000 | |
|---|---|---|---|
| $Na_2O$ | 15,61 | Na | 2.320 |
| $Li_2O$ | 1,90 | Li | 585 |
| $K_2O$ | 1,40 | K | 137 |
| BaO | 1,83 | Ba | 55 |
| CaO | 0,65 | Ca | 54 |
| MgO | 0,30 | Mg | 34 |
| F | 0,96 | F | 232 |
| $P_2O_5$ | 4,45 | P | 289 |
| $B_2O_3$ | 19,94 | B | 2.638 |
| $Al_2O_3$ | 1,98 | Al | 179 |
| $SiO_2$ | 33,32 | Si | 2.554 |
| $ZrO_2$ | 5,81 | Zr | 217 |
| $TiO_2$ | 0,69 | Ti | 40 |
| NiO | 3,95 | Ni | 244 |
| CoO | 0,40 | Co | 24 |
| $Fe_2O_3$ | 3,76 | Fe | 217 |
| CuO | 2,47 | Cu | 143 |
| MnO | 0,58 | Mn | 38 |

$$\Sigma\,(Na,Li,K) + 2\,\Sigma\,(Ba,Ca,Mg) - \Sigma\,F - \Sigma\,P = 2.807$$

$$\Sigma\,(B,Al) = 2.817$$

$$\Sigma\,(Si,Zr,Ti) = 2.811$$

Die nach 20 bis 30 Minuten homogene, "fadenglatte" Schmelze wurde zwischen Stahlwalzen abgeschreckt und das dabei entstehende Glasband gebrochen. Die so erhaltenen Flakes wurden als Pulver elektrostatisch und als Schlicker durch Spritzen auf Stahlsubstrate aufgebracht und in einem Gradientenofen im Temperaturbereich 770 bis 880°C eingebrannt.

Pulverauftrag

Wie im Beispiel 2 beschrieben wurden in einer Porzellankugelmühle 100 g Emailflakes und 0,4 g Methyl-Wasserstoff-Siloxan solange vermahlen, bis der Rückstand des Pulvers auf dem 16.900 Maschensieb (Maschenweite 40 μm) weniger als 20% betrug.

Das Pulver, das einen Oberflächenwiderstand von mehr als $10^{12}$ Ω aufwies, wurde mit einer Elektrostatikpistole unter Anlegen von 70 kV Spannung auf 60 × 450 mm Stahlbleche von 1 mm Stärke in gleichmäßiger Schicht aufgesprüht. Nach dem Aufbringen von 14 g Pulver (5,2 g/dm²) wurden die Stahlbleche im Gradientenofen 10 Minuten eingebrannt. Die Stahlblechstreifen waren

a) entfettet
b) nicht entfettet.

Schlickerauftrag

1.000 g Flakes wurden in einer mit 3.500 g Schwermahlkugeln gefüllten Kugelmühle nach folgendem Mühlenversatz zu einem Schlicker vermahlen.

|                      | Gew.-%                          |
|----------------------|---------------------------------|
| Fritte               | 100                             |
| Ton                  | 6                               |
| Na-Nitrit            | 0,1                             |
| Borax                | 0,2                             |
| Kalziumsilikathydrat | 0,1                             |
| Wasser               | ca. 50                          |
| Mahlfeinheit         | 1 % Rückstand auf 3.600 Maschensieb |
| Dichte               | 1,70 g/ml                       |

Vom diesem Schlicker wurde auf die oben genannten Blechstreifen durch Spritzen so viel aufgebracht, daß sich nach dem Einbrennen eine Emailschichtstärke von 0,15 mm ergab. Nach dem Trocknen wurden die Probebleche im Gradientenofen 10 Minuten im Temperaturbereich 770 bis 880°C eingebrannt. Die Stahlvorbehandlung erfolgte in üblicher Weise durch Entfetten. Die Haftungsprüfung mit dem Fallgerät ergab ausgezeichnete Haftung über den gesamten Temperaturbereich.

## Beispiel 2

Zur Herstellung der Fritten 1 bis 9 des Systems $Si_1B_1Na_{0,6-1,4}Ni_{0,06}O_z$ wurden die Rohstoffe Borax $Na_2B_4O_7$, Soda $Na_2CO_3$, Quarzmehl $SiO_2$ und Nickeloxid NiO jeweils im stöchiometrischen Verhältnis eingewogen, gemischt und in Schamottetiegeln bei 1.100°C 25 Minuten mittels eines elektrisch beheizten Muffelofens geschmolzen, die Schmelze zwischen Stahlwalzen abgeschreckt und das dabei entstehende Glasband zu Flakes gebrochen.

Jeweils 100 g dieser so hergestellten Flakes wurden in einer Bloch-Rosetti-Mühle, die 30 insgesamt 240 g schwere Mahlkugeln enthielt, unter Zugabe von 0,4 g Methyl-Wasserstoff-Siloxan solange vermahlen, bis der Rückstand des Pulvers auf dem 40 µm Sieb (16.900 Maschen/cm) weniger als 20% betrug.

Das Emailpulver wurde mit einer handelsüblichen Elektrostatikpistole unter Anlegen von 70 kV Spannung an die Koronaelektrode auf 100 × 100 mm, in üblicher Weise entfettete Stahlbleche von 1,0 mm Dicke aufgesprüht. Nach dem Aufbringen von 5,2 g Pulver/dm² wurden die beschichteten Probeplatten jeweils bei 770, 785 und 805°C eingebrannt.

Die Prüfung der Haftfestigkeit erfolgte mit dem Fallgerät nach dem DEZ Merkblatt F 6.2. Hierzu wurde aus einer Höhe von 750 mm ein am Ende halbkugelförmig ausgebildeter 2.000 g schwerer Schlagbolzen auf die emaillierte Testplatte fallengelassen. Die Bewertung der Haftung erfolgte visuell an der verformten Probe.

Hieraus geht hervor, daß optimale Haftung insbesondere bei niedrigen Temperaturen bei Fritten erzielt werden, die annähernd dem Atomverhältnis Si : B : Na : Ni = 1 : 1 : 1 : 0,06 entsprechen.

## Beispiel 3

Die im Beispiel 2 angegebenen Fritten Nr. 1 und Nr. 9, die alleine im gesamten Temperaturbereich von 770 bis 830°C keine Haftung ergaben, wurden zu gleichen Teilen (jeweils 50 g) – wie bereits beschrieben – in einer Kugelmühle mit 0,4 Gew.-% Polysiloxan vermahlen. Das Pulver wurde mit einer handelsüblichen Elektrostatikpistole auf vorbehandelte 60 × 450 mm Stahlbleche von 1 mm Stärke aufgesprüht und in einem im Temperaturbereich von 770 bis 880°C geregelten Gradientenofen eingebrannt.

Die Haftungsprüfung mit dem Fallgerät ergab über den gesamten Temperaturbereich ausgezeichnete Haftung.

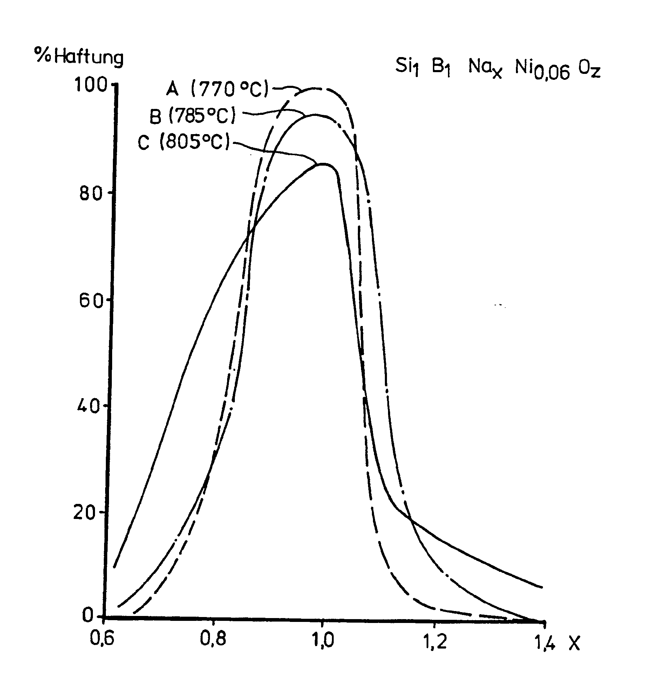

## Ansprüche

1. Grund- bzw. Direktmetallfritten, die nach dem Einbrennen auf emaillierfähigem unlegiertem Stahl eine verbesserte Haftung bei Brenntemperaturen unter 800°C ergeben, mit einer Zusammensetzung von

| | | |
|---|---|---|
| $Na_2O$ | 5-25 | Gew.-% |
| $K_2O$ | 0-12 | " |
| $Li_2O$ | 0- 8 | " |
| BaO | 0-26 | " |
| CaO | 0-16 | " |
| MgO | 0- 2 | " |
| F | 0-10 | " |
| $B_2O_3$ | 5-30 | " |
| $Al_2O_3$ | 0-10 | " |
| $SiO_2$ | 25-65 | " |
| $ZrO_2$ | 0-16 | " |
| $TiO_2$ | 0-14 | " |

dadurch gekennzeichnet, daß die Fritten 1 bis 6 Gew.-% je Komponente – bezogen auf die Gesamtfritte – an Haftoxiden enthalten und die übrigen Bestandteile so gewählt sind, daß folgende Gleichung für die Atomzahlen der Elemente erfüllt wird :

$\Sigma$ Li-, k-, Na-Atome + 2 $\Sigma$ Ba-, Ca-, Mg-Atome
$-\Sigma$ Fluoratome $-\Sigma$ Phosphoratome =
= $\Sigma$ Boratome + $\Sigma$ Aluminiumatome =
= $\Sigma$ Siliciumatome + $\Sigma$ Zirkoniumatome +
$\Sigma$ Titanatome,

wobei die Abweichung vom Verhältnis 1 : 1 : 1 maximal ± 8% für jeden der drei Anteile betragen soll, und wobei die Summe der Erdalkaliatome höchstens 10% der Na-Atome beträgt.

2. Verwendung der Emailfritten nach Anspruch 1 für den elektrostatischen Pulverauftrag.

## Revendications

1. Frittes pour métal de base ou métal direct, qui présentent une très bonne adhérence après cuisson sur de l'acier non allié apte à l'émaillage à des températures de cuisson inférieures à 800°C, répondant à la composition :

| | | |
|---|---|---|
| $Na_2O$ | 5-25 | parties en poids |
| $K_2O$ | 0-12 | " |
| $Li_2O$ | 0- 8 | " |
| BaO | 0-26 | " |
| CaO | 0-16 | " |
| MgO | 0- 2 | " |
| F | 0-10 | " |
| $B_2O_3$ | 5-30 | " |
| $Al_2O_3$ | 0-10 | " |
| $SiO_2$ | 25-65 | " |
| $ZrO_2$ | 0-16 | " |
| $TiO_2$ | 0-14 | " |

caractérisées en ce qu'elles contiennent 1 à 6% en poids d'oxydes adhérents pour chaque composant - par rapport à la fritte totale - et en ce que les constituants restants sont choisis de manière que l'équation suivante concernant les nombres d'atomes des éléments soit satisfaite :

$\Sigma$ atomes de Li, K, Na + 2 $\Sigma$ atomes de Ba, Ca, Mg
$- \Sigma$ atomes de fluor $- \Sigma$ atomes de phosphore
$= \Sigma$ atomes de bore + $\Sigma$ atomes d'aluminium
$= \Sigma$ atomes de silicium + $\Sigma$ atomes de zirconium +
$\Sigma$ atomes de titane,

l'écart relativement à la proportion 1 : 1 : 1 devant s'élever au maximum à ± 8% pour chacune des trois portions, et la somme des atomes de métaux alcalino-terreux s'élevant au maxium à 10% des atomes de sodium.

2. Utilisation des frittes d'émail suivant la revendication 1 pour l'application électrostatique de poudre.

**Claims**

1. Base or direct enamel frits which when stoved at temperatures below 800°C on unalloyed steel capable of being enamelled show improved adherence to the steel, said frits having a composition of

| | | |
|---|---|---|
| $Na_2O$ | 5-25% | by wt. |
| $K_2O$ | 0-12 | " |
| $Li_2O$ | 0- 8 | " |
| BaO | 0-26 | " |
| CaO | 0-16 | " |
| MgO | 0- 2 | " |
| F | 0-10 | " |
| $B_2O_3$ | 5-30 | " |
| $Al_2O_3$ | 0-10 | " |
| $SiO_2$ | 25-65 | " |
| $ZrO_2$ | 0-16 | " |
| $TiO_2$ | 0-14 | " |

characterised in that the frits contain from 1 to 6% by weight per component, based on the total frit, of bonding oxides and the other components are chosen to conform to the following equation for the atomic numbers of the elements :

$\varepsilon$ Li, K, Na atoms + 2 $\varepsilon$ Ba, Ca, Mg atoms
$- \varepsilon$ fluorine atomes $- \varepsilon$ phosphorus atoms =
$\varepsilon$ boron atoms + $\varepsilon$ aluminium atoms +
$\varepsilon$ silicon atoms + $\varepsilon$ zirconium atoms +
titanium atoms,

in which the deviation from the ratio 1 : 1 : 1 should be at most ± 8% for each of the three components and the sum of the alkaline earth atoms is at most 10% of the Na atoms.

2. Use of the enamel frits according to Claim 1 for electrostatic powder application.

%Haftung

$Si_1 \ B_1 \ Na_x \ Ni_{0,06} \ O_z$

A (770 °C)
B (785°C)
C (805°C)